**Europäisches Patentamt**

**European Patent Office**

**Office européen des brevets**

(19)

(11) Veröffentlichungsnummer: **0 051 740**
**A2**

# (12) EUROPÄISCHE PATENTANMELDUNG

(21) Anmeldenummer: 81107900.3

(22) Anmeldetag: 05.10.81

(51) Int. Cl.³: **H 04 N 5/92**

(30) Priorität: 08.11.80 DE 3042269

(43) Veröffentlichungstag der Anmeldung: **19.05.82**
**Patentblatt 82/20**

(84) Benannte Vertragsstaaten: **AT DE FR GB NL**

(71) Anmelder: **BASF Aktiengesellschaft,**
**Carl-Bosch-Strasse 38, D-6700 Ludwigshafen (DE)**

(72) Erfinder: **Ilmer, Andreas, Dr., Londoner Ring 15,**
**D-6700 Ludwigshafen (DE)**
Erfinder: **Andreae, Karl, Schubertstrasse 10,**
**D-6711 Beindersheim (DE)**

(54) Verfahren und Anordnungen zum Verändern der Audioinformation in einem Audio/Video-Aufzeichnungs/Wiedergabesystem.

(57) Die Erfindung betrifft Verfahren und Schaltungsanordnungen zum Verändern der Audioinformation in einem Audio/Video-Aufzeichnungs/Wiedergabesystem, insbesondere in einem Farbvideosystem, worin die Audiosignale als Abtastimpulse eines Zeitmultiplexverfahrens in das Farbvideosignal, insbesondere in eine Austastlücke des Signals, eingefügt werden und das aufgezeichnete Original-Audiosignal mit einem Neu-Audiosignal überschrieben wird. Vorzugsweise wird die Horizontal-Austastlücke des Videosignals dafür benutzt, und im Falle eines Farbvideosignals wird der Farbburst in den Boden der Horizontal-Austastlücke versetzt, um für das Audiosignal auf der hinteren Schwarzschulter der Horizontal-Austastlücke freizumachen. Die erfindungsgemäßen Schaltungsanordnungen enthalten entsprechende, den Verfahrensmaßnahmen zweckmäßig angepaßte Schaltungseinheiten. Verwendbar ist die Erfindung vorzugsweise für Farbvideosysteme ohne Verlust an Aufzeichnungskapazität auf dem Aufzeichnungsträger.

Verfahren und Anordnungen zum Verändern der Audioinformation in einem Audio/Video-Aufzeichnungs/Wiedergabesystem

Die Erfindung betrifft Verfahren und Anordnungen zum Verändern der Audioinformation in einem Audio/Video-Aufzeichnungs/Wiedergabesystem, in dem die Audiosignale in Form
von Abtastimpulsen im Zeitmultiplexverfahren in das Videosignal eingefügt sind.

Es ist prinzipiell bekannt, innerhalb des Videosignals,
insbesondere des Fernsehsignals, für die Übertragung von
der mit Audiosignalen im Zeitmultiplexverfahren vorzunehmen. Obwohl durch Komprimieren und Expandieren überall im
Videosignal oder in der Vertikalaustastlücke Raum für die
Unterbringung solcher Tonsignale geschaffen werden kann,
ist es zweckmäßig, die Horizontal-Austastlücke zu verwenden. Dafür ist es ebenfalls bekannt, die analog vorliegenden Audioinformationen als modulierte Impulse, im
einzelnen nach dem Puls-Amplituden-, Puls-Phasen- oder
Puls-Code oder Puls-Längen-Modulations-Verfahren umzusetzen (vgl. z.B. Funkschau 1967, Heft 1, Seite 13).

In Magnetband-A/W-Systemen, in denen die Informationen auf
separaten Spuren aufgezeichnet werden, besteht die Möglichkeit ein oder mehrere separate Tonspuren vorzusehen. Das
hat jedoch den Nachteil einer geringeren Aufzeichnungskapazität für Videosignale und ist damit für Heimvideo-A/W-
-Systeme, in denen minimaler Bandverbrauch angestrebt
wird, zu vermeiden. Grundsätzlich besteht ferner die
Möglichkeit, Video- und Audiosignale zusammenzufassen und
in einer gemeinsamen Magnetspur aufzuzeichnen. Dabei wird
jedoch der Nachteil in Kauf genommen, daß eine Änderung
oder Neufassung der Audioinformation, was als "Nachvertonen" bezeichnet wird, ohne Beeinflussung der Video-Infor-

De/P

0051740

mation nur aufwendig mittels eines zweiten Videoaufzeichnungsgerätes oder durch Wiedergabe, Veränderung und Neuaufzeichnung an einer anderen Bandstelle als der, wo das Original-Audiosignal aufgezeichnet war, durchführbar ist.

Um Aufzeichnungskapazität auf dem Aufzeichnungsträger zu sparen, ist es für Video-A/W-Systeme mit Schrägspur- oder Längsspuraufzeichnung überraschend vorteilhaft, die Audioinformation in der Horizontal-Austastlücke unterzubringen.

Die vorliegende Erfindung hat sich weiterhin die Aufgabe gestellt, einfache Verfahren und Anordnungen zum Verändern der Audioinformation bereitzustellen, um bei besagten Video-A/W-Systemen das Nachvertonen ohne großen Aufwand zu ermöglichen.

Erfindungsgemäß wird diese Aufgabe gelöst durch ein Verfahren zum Verändern der Audioinformation in einem Audio/Video-Aufzeichnungs/Wiedergabesystem, in dem die Audiosignale in Form von Abtastimpulsen im Zeitmultiplexverfahren in das Videosignal eingefügt sind, bei dem das auf dem Aufzeichnungsträger aufgezeichnete Original-Audiosignal mit einem Neu-Audiosignal überschrieben wird.

Es ist prinzipiell bekannt (z.B. aus der DE-OS 24 57 636) die Toninformation mittels eines separaten Schrägspalt--Tonkopfes durch Überschreiben der Videoinformation aufzubringen. Dabei besteht die Schwierigkeit, die Video- und Tonsignale bei Wiedergabe einwandfrei voneinander zu trennen und gegebenenfalls die Original-Tonsignale zu unterdrücken. Es ist weiterhin für Magnetband-Aufzeichnungen bekannt (DE-AS 10 71 367), bei der Tonaufzeichnung zu einer Grundsignalaufzeichnung auf einem Magnetband eine Zusatzaufzeichnung dadurch aufzubringen, daß die Zusatzsignalaufzeichnung auf einem Teil der Spurbreite der Grundsignalaufzeichnung aufgebracht wird. Praktisch erfolgt das Hinzufügen der Zusatzsignalaufzeichnung damit durch Teil-Überschreiben der Grundsignalaufzeichnung mit kleinerer Spurbreite und/oder versetzt zur Spurlage der Grundsignalaufzeichnung mittels zweier ortsfester Aufzeichnungsköpfe oder eines einzigen vertikal verschiebbaren Aufzeichnungskopfes. Ein solches Überschreiben setzt eine separate Aufzeichnung der Video- und Tonsignale in verschiedenen Magnetspuren voraus.

Die erfindungsgemäß gestellte Aufgabe wird mit Hilfe einer Anordnung gelöst, bei der Aufnahmekanal einen FM-Modulator aufweist und mindestens ein Synchronisiersignal-Abtrenner vorgesehen ist, wenn hinter den Audio- und Videosignaleingängen und vor dem FM-Modulator Schalter angeschlossen sind und Zeitglieder zwischen dem mindestens einen Synchronisier-Abtrenner und dem Schalter und dem FM-Modulator vorgesehen sind, zum zeitrichtigen Einsetzen des Audiosignals in die Horizontal-Austastlücke des Videosignals.

Im weiteren enthält die Anordnung, wenn im Wiedergabekanal des A/W-Systems ein FM-Demodulator und ein Synchronisiersignal-Abtrenner vorgesehen sind, erfindungsgemäß Schalter zwischen den FM-Demodulator und den Audio- und Videosignalausgängen und zwischen dem Synchronisiersignal-Abtrenner und den Schaltern Zeitglieder zur zeitrichtigen Steuerung der Schalter bei Wiedergabe der Signale.

Ferner ist der A/W-Umschalter ebenfalls über die Zeitglieder gesteuert. Die Merkmale der Anordnung zusammengenommen, sind also nur wenige zusätzliche Schaltungsstufen erforderlich, um die Zusatzmöglichkeit der Signalnachvertonung bereitzustellen.

Die Zeitglieder stellen erfindungsgemäß die Dauer und die zeitliche Lage des oder der Abtastimpulse bei Aufnahme, Wiedergabe und Nachvertonen ein.

Im Falle eines Farbvideosignal A/W-Systems können zweckmäßig oder müssen, z.B. bei Schmalbandaufzeichnung, eine Schaltung zum Erfassen des Farbburstsignals auf der hinteren Schwarzschulter der Horizontal-Austastlücke und eine Umsetzschaltung für das Farbburstsignal in den Boden des Synchronisiersignals und eine Schaltung zum Zurücksetzen in die Originallage vorhanden sein.

Dadurch wird die erfindungsgemäße Anorndung auch für Farbvideo-A/W-Systeme mit Vorteil verwendbar.

In vorteilhafter Weiterbildung des Verfahrens nach dem Hauptanspruch können die Abtastimpulse in einer Austastlücke, insbesondere in der Horizontal-Austastlücke des Videosignals eingefügt sein und das aufgezeichnete Audiosignal in der Austastlücke bzw. der Horizontal-Austastlücke wird mit dem Neu-Audiosignal überschrieben und somit erneuert oder verändert.

In weiterer Ausgestaltung des Verfahrens kann das Verändern des Audiosignals im Wiedergabebetrieb des Systems durch Umschalten während der Horizontal-Austastlücke in den Aufnahmebetrieb erfolgen, währenddessen das überschreiben vorgenommen wird.

Zweckmäßig kann das Audiosignal ein Puls-Amplituden-moduliertes Signal (PAM-Signal) sein. Es kann andererseits auch zweckmäßig sein, das Audiosignal als Puls-Phasen- oder Puls-Code-moduliertes Signal auszubilden, wodurch gegebenenfalls mehrere Audiokanäle frequenzbandmäßig auf der Schwarzschulter unterzubringen wären. Schaltungsmäßig

0051740

kann mittels Erfassen der Horizontal-Synchronisierimpulse das Umschalten in den Aufnahmebetrieb gesteuert werden.

Für ein Farbvideo-A/W-System ist es erfindungsgemäß vorteilhaft - bei Schmalbandsystemen erforderlich - , den Farbburst von der hinteren Schwarzschulter der Horizontal--Austastlücke in den Boden des Horizontal-Synchronisiersignals zu versetzen, wodurch beispielsweise die zu Verfügung stehende Frequenzbandbreite oder der Störabstand vergrößert wird.

Einzelheiten der erfindungsgemäßen Verfahrens- und Anordnungsmerkmale sind der nachfolgenden Beschreibung eines in der Zeichnung dargestellten Schaltungsbeispieles entnehmbar.

In der Zeichnung ist dargestellt in

Figur 1    ein Blockschaltbild der Aufnahme/Wiedergabekanäle eines A/W-Magnetbandsystems gemäß der Erfindung

Figur 2    ein Blockschaltbild des A/W-Magnetbandsystems gemäß Figur 1 modifiziert für die Betriebsart "Nachvertonung"

Figur 3a    ein schematisches Signaldiagramm, wobei das Audiosignal als PAM-Signal vorliegt und der Farbburst versetzt ist

Figur 3b    ein Schaltdiagramm für die Betriebsart "Aufnahme"

Figur 3c    ein Schaltdiagramm für die Betriebart "Wiedergabe"

Figur 3d    ein Schaltdiagramm für die Betriebsart "Nachvertonen".

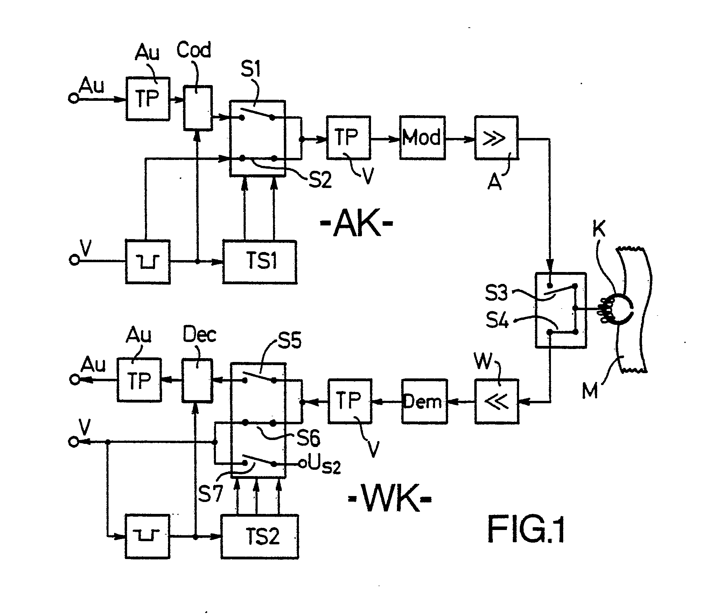

In Figur 1 ist das Magnetband-Aufzeichnungs-/Wiedergabe-
-(A/W-)System schematisch ohne Farbkanal dargestellt. Grob
gesehen besteht es aus den Aufnahmekanal AK, dem A/W-Magnetkopf K, dem Magnetband M und dem Wiedergabekanal WK.

Der Aufnahmekanal AK hat an seinem Eingang im Aufzeichnungsbetrieb ein Audiosignal Au und ein Videosignal V (das
auch ein Farbvideosignal sein kann) anliegen. Das Audiosignal wird über den Tiefpaß TPAu begrenzt, dessen Grenzfrequenz gemäß der jeweils benutzten Abtastfrequenz gewählt
ist. Das Ausgangssignal des Tiefpasses wird auf den Schalter S 1 geleitet. Das Videosignal V wird nach Klemmung
eines Spannungswertes des Horizontal-Synchronisiersignals (HS), im folgenden kurz als "Sync" bezeichnet, und
nachfolgender Abtrennung des Sync-Signals ebenfalls einem
Schalter S 2 zugeführt. Hinter den Schaltern S 1 und S 2
folgen ein Tiefpaß TPV mit geeigneter Grenzfrequenz von
z.B. 3 MHz für das Videosignal V, ein Frequenzmodulator Mod sowie ein Aufsprech-Verstärker, wobei letzterer das frequenzmodulierte kombinierte Audio-/Videosignal
über den Aufnahmeschalter S 3 dem A/W-Kopf K zur Aufzeichnung auf dem Band M zuführt.

Der Wiedergabekanal WK beginnt mit dem Wiedergabeschalter
S 4, an den der Wiedergabeverstärker W angeschlossen ist.
Am Ausgang des Verstärkers W liegt der FM-Demodulator
Dem, danach ein Tiefpaß TPV und daran ist eine Schaltereinheit S 5 bis S 7 angeschaltet. Davon schaltet S 5 das
wiederzugebene Audiosignal Au über einen Tiefpaß TPAu auf
den Audio-Ausgang des Systems. Schalter S 6 schaltet das
Videosignal V auf den Video-Ausgang des Systems, wobei an
letzteren noch ein Sync-Abtrenner angeschlossen ist. In
beiden Kanälen AK und WK liegen zwischen den Sync-Abtrennern und der jeweiligen Schaltereinheit eine Zeitsteuerein-

0051740

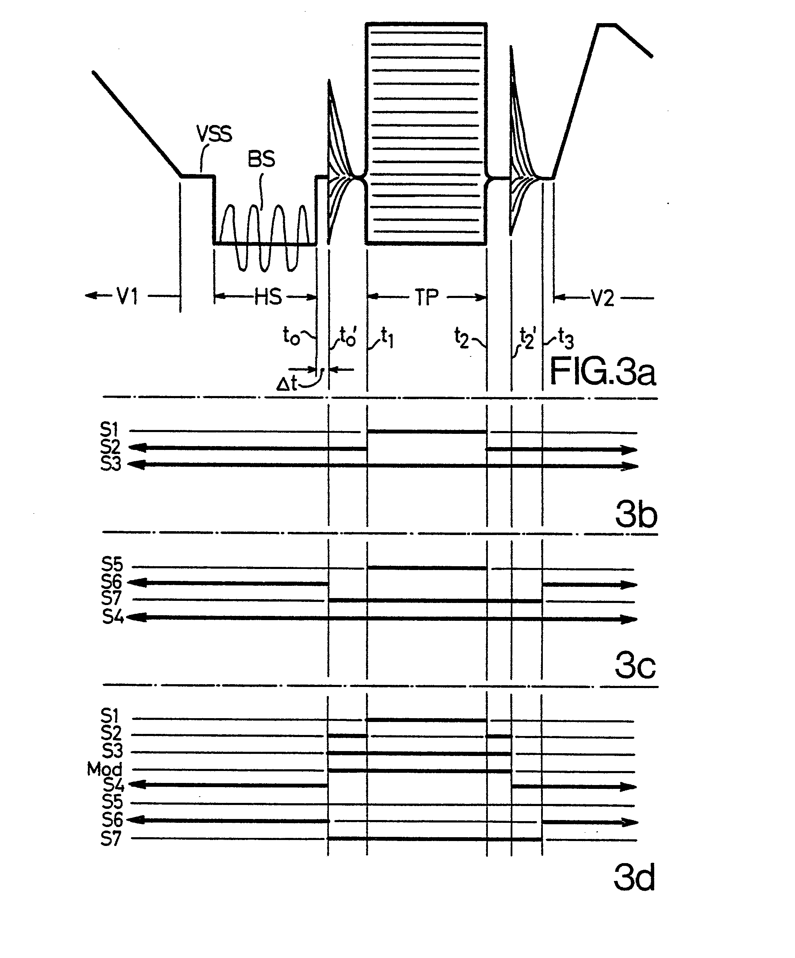

heit TS, durch die die zeitliche Steuerung, die im Diagramm der Figur 3 dargestellt ist, bewirkt wird.

In Figur 3a ist ein Teil einer Fernseh-Horizontal-Zeile mit Sync-Signal HS und Horizontal-Austastlücke prinzipiell dargestellt.

Von links nach rechts folgt auf die Videoinformation V 1 die vordere Schwarzschulter VSS der Sync-Boden und die hintere Schwarzschulter HSS, aus denen der Sync-Impuls HS gebildet ist. Insgesamt für die Unterbringung des Audiosignals benutzbar ist der Zeilenbereich vom Zeitpunkt to der hinteren Sync-Impulsflanke bis zum Beginn $t_3$ der neuen Zeile mit der Videoinformation $V_2$.

Es ist Aufgabe der Schalter, Sync-Abtrenner und Zeitsteuereinheiten, die Audio-Signale in diesen Zeichenbereich bei Aufnahme bzw. Nachvertonung einzusetzen bzw. bei Wiedergabe wieder herauszulösen.

Das Audiosignal wird in Abtastimpuls-Form aufgezeichnet. Zu diesem Zweck wird das Analog-Audiosignal in Abtastimpulse umgesetzt mittels einer geeigneten Abtastfrequenz. Als Frequenz bietet sich die Zeilenfrequenz oder ein Mehrfaches der Zeilenfrequenz an. Bei Verdoppelung der Abtastfrequenz verdoppelt sich auch die Bandbreite des einfügbaren Audiosignals. Bei Verwendung der Zeilenfrequenz von 15,625 KHz als Abtastfrequenz ergeben sich eine theoretische Audosignal-Frequenzbandbreite von 7,813 KHz und praktisch etwa 6,5 KHz.

Die Umsetzung in Abtastimpulse erfolgt beispielsweise gemäß Figur 3a durch Puls-Amplituden-Modulation (PAM), es können jedoch auch Puls-Phasen- oder Puls-Längen-Modulation verwendet werden. Falls genügend Bandbreite im

0051740

A/W-System zur Verfügung steht, ist auch günstig, Puls--Code-Modulation (PCM) Verfahren zur Verbesserung der Tonqualität und zur Erhöhung der Zahl der Tonkanäle zu benutzen.

Beim Aufnahmebetrieb wird mittels der Schalter S 1 und S 2 das Einsetzen der Audio-Abtastimpulse in die Horizontal--Austastlücke, genauer auf die hintere Schwarzschulter HSS, gesteuert vorgenommen. Zur Zeit to wird vom Sync-Abtrenner die entsprechend verzögerte vordere Anstiegsflanke des Sync-Signals HS bereitgestellt. Über die Zeitsteuereinheit TS wird gemäß Figur 3a nach geeigneter Verzögerung $\Delta$t zur Zeit to der Schalter S 1 angesteuert. Die Schalter S 1 - S 7 können elektronische Schalter, also z.B. Multivibrator-Schaltungen sein.

Die noch unten erläuterte Schaltzeit von etwa 1 $\mu$s entspricht der Zeitdauer von to' bis $t_1$, in der in der Praxis ein Störimpuls SP auftritt.

Vom Zeitpunkt $t_1$ bis zur Zeit $t_2$ wird der Audio-Abtastimpuls eingetastet, wobei die längstmögliche Zeitdauer gewählt wird, um den Audiosignal-Störabstand so groß wie möglich zu erhalten. Nach der Zeit $t_2$ wird Schalter S 1 aus- und Schalter S 2 eingeschaltet, wodurch wiederum ein Störimpuls SP auftritt, wonach aber das Videosignal durchgelassen wird. Durch diese Schaltersteuerung wird während des sichtbaren Zeilenteils das Videosignal und während der Dunkeltastung der Audioabtastwert auf den FM-Modulator Mod übertragen und nach Verstärkung mittels des Kopfes K auf das Band M aufgezeichnet.

Diagramm 3b zeigt die theoretischen Schalterstellungen bis Zeit $t_1$         Schalter S2 "Ein"-Übertragung des Videosignals $V_1$ auf den FM-Modulator, dann

zur Zeit $t_1$  Schalter S 2 "Aus"
Schalter S 1 "Ein"-Übertragung des oder der
Audio-Abtastimpulse —

zur Zeit $t_2$  Schalter S 1 "Aus".
Schalter S 2 "Ein"

Schalter S 3  "Ein", also in Aufnahmestellung.

Die jeweilige Stellung "Ein" ist mit stark ausgezogenen
Strichen gekennzeichnet.

Nach Beendigung des Aufzeichenvorganges ist also der
Audio-Abtastimpuls auf der hinteren Schwarzschulter HSS
des Videosignals als FM-Signal mittels eines einzigen
Kopfes K in einer Spur des Bandes M aufgezeichnet. Das bei
Schließen des Schalters S 4 vom Band M über Kopf K abgetastete und über Verstärker W, FM-Demodulator Dem, Tiefpaß
TPV wiederhergestellte Signal wird den Schaltern S 5 und
S 6 zugeführt, wo die Audio- und Videosignalteile voneinander getrennt werden. Die Steuerung der Schaltvorgänge
erfolgt durch Erfassen des Sync-Impulses über den Syncsignal-Abtrenner und die Zeitsteuereinheit TS 2 entsprechend
dem Zeitdiagramm in Figur 3c. In der Folge wird zwischen
den Zeiten $t_1$ und $t_2$ das Audiosignal an den Tiefpaß TPAu
gegeben und in den übrigen Zeiten steht das Videosignal V
am Video-Ausgang an. Über mehrere Zeilen wird durch den
Tiefpaß ein kontinuierliches Audiosignal Au zurückerhalten. Um das Videosignal, insbesondere die Horizontal-Austastlücke, zu vervollständigen wird etwa parallel zur
Wiedergabe des Au-Signals ein dem Schwarzwert entsprechender Spannungswert US 2 entsprechend der Original-Zeitdauer
der Schwarzschulter wieder eingetastet. Die einzelnen
Schaltzeiten sind Figur 3b entnehmbar.

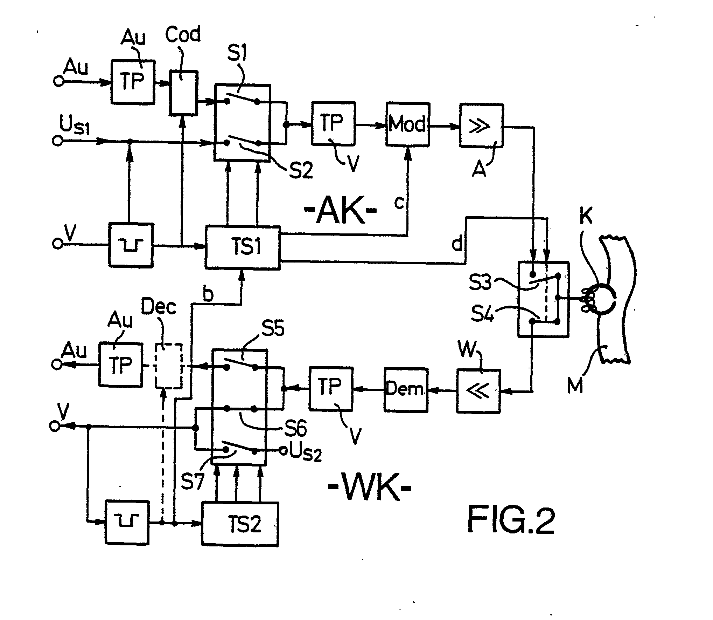

In Fig. 2 ist ein für die Nachvertonung modifiziertes Blockschaltbild dargestellt, deshalb werden nur die Unterschiede beschrieben.

Die Nachvertonung des oder der auf der hinteren Schwarzschulter befindlichen Audio-Abtastimpulse wird durch Überschreiben der Speicherstelle auf dem Magnetband M mit ausreichend hoher Aussteuerung, damit das Originalsignal vollständig überdeckt wird, durchgeführt.

Die Betriebsart Nachvertonen wird gemäß Figur 2 in der Betriebsart Wiedergabe vorgenommen, wobei zum eigentlichen Nachvertonvorgang in den Aufnahmebetrieb umgeschaltet wird, wie noch erläutert wird. Alle Schaltfunktionen im Aufnahme- und Wiedergabekanal in Fig. 2 werden von dem im Wiedergabesignal erfaßten Sync-Impuls gesteuert entsprechend dem Zeitdiagramm in Bild 3d.

Für die Nachvertonung gemäß Fig. 2 liegt am Audio-Eingang ein Nachvertonungssignal Au in analoger Signalform. Am Video-Eingang liegt kein Signal V an. Aber an der Verbindungsleitung vom Sync-Abtrenner zum Schalter S 2 liegt eine Spannungsquelle für die Schwarzwertspannung US 1. Zwischen dem Sync-Abtrenner des Kanals WK und der Zeitsteuereinheit TS 1 im Kanal AK besteht eine Verbindungsleitung b, die zweckmäßig auftrennbar ausgeführt ist. Von der Zeitsteuereinheit TS 1 besteht weiterhin sowohl eine Steuerverbindung c zum FM-Modulator Mod als auch eine Steuerverbindung d zu den Schaltern S 3 und S 4. Aufgrund der starken Pegelunterschiede am Videokopf zwischen Aufnahme- und Wiedergabebetrieb sind beim Schalten auftretende Übersteuerungs- und Einschwingeffekte, die als Störimpulse SP dargestellt sind, nicht zu vermeiden. Die Störimpulse SP treten nur beim Betrieb Nachvertonen nämlich durch Schalter S 3 und S 4 auf.

0051740

Prinzipiell erfolgt die Nachvertonung ausgehend vom Wiedergabebetrieb (Schalter S 4 "Ein") dadurch, daß zur Zeit to' die Schalter S 2, S 3 und S 7 geschlossen und der FM-Modulator wirksam geschaltet werden, und über Schließen des Schalters S 1 dem FM-Modulator das Nachvertonsignal zugeführt wird, so daß das FM-Audio-Abtastsignal im Zeitraum $t_1$ bis $t_2$ auf dem Band aufgezeichnet wird.

Der Spannungswert US 1 wird über den Schalter S 2 im Kanal AK während der Zeiten to' bis $t_1$ und $t_2$ bis $t_2'$ und US 2 im Kanal WK während der Zeit to' bis $t_3$ eingetastet.

Es ist theoretisch auch vorteilhaft möglich, den Oszillator des FM-Modulators in der Betriebsart Nachvertonung ständig eingeschaltet zu lassen und nur den Ausgang des Verstärkers A über die Zeitsteuereinheit TS 2 während der Zeit to' bis $t_2$ aufzuschalten.

Die Herstellung der Audio-Abtastwerte im Puls-Phasen-, Puls-Längen oder Puls-Code-Verfahren ist durch die Modifikation der beschriebenen Schaltungen möglich, die ohne weiteres vom Fachmann realisierbar sind. So sind z.B. mittels eines spannungsgesteuerten Monoflops die Amplituden des Audiosignals in Pulse unterschiedlicher Phasenlage oder Länge umwandelbar. Die Bausteine Cod im Aufzeichnungskanal und Dec im Wiedergabekanal sorgen für die geeignete Kodierung und Dekodierung der Audiosignale.

Die Zeitsteuereinheiten TS 1 und TS 2 lassen sich durch alle Arten von Zeitschaltern oder Verzögerungseinrichtungen realisieren z.B. durch Mono-Flops. TS 1 und TS 2 sind unterschiedlich auszulegen, um die ungleichen Signalwege zu kompensieren.

0051740

Liegt mit dem Videosignal V ein Farbvideosignal vor, so ist es mittels bekannter Bursttrennschaltungen möglich, im Aufnahmekanal AK den Farbburst von der hinteren Schwarzschulter zu entfernen und in den Sync-Boden einzusetzen, dadurch, daß der Burst neu erzeugt und eingesetzt wird. Vor dem Videosignalausgang muß der Burst jedoch wieder auf die Schwarzschulter eingetastet werden.

Die beschriebenen Anordnungen wurden in der Praxis mit einem Längsaufzeichnungssystem mit Erfolg getestet und ergaben folgende technische Kennwerte bei einem Schmalband - A/W-System bis 3 MHz. Bei einem Videosignal-Störabstand (bewertet) von 48 dB ergab sich bei Originalvertonung ein Audiosignal-Störabstand (bewertet) von ca. 50 dB und bei Nachvertonung eine maximale Einbuße von etwa 1 dB.

0051740

## Patentansprüche

1. Verfahren zum Verändern der Adioinformation in einem
Audio/Video-Aufzeichnungs/Wiedergabesystem, in dem die
Audiosignale(Au) in Form von Abtastimpulsen im Zeitmultiplexverfahren in das Videosignal (V) eingefügt
sind, dadurch gekennzeichnet, daß das auf dem Aufzeichnungsträger (M) aufgezeichnete Original-Audiosignal
mit einem Neu-Audiosignal überschrieben wird.

2. Verfahren nach Anspruch 1, wobei die Abtastimpulse im
Zeitmultiplexverfahren in einer Austastlücke, insbesondere in der Horizontal-Austastlücke (Hs) des Videosignals (V) eingefügt sind, dadurch gekennzeichnet, daß
das auf dem Aufzeichnungsträger (M) aufgezeichnete
Original-Audiosignal in der Austastlücke bzw. Horizontal-Austastlücke (Hs) mit einem Neu-Audiosignal überschrieben wird.

3. Verfahren nach Anspruch 1, dadurch gekennzeichnet,
daß das Verändern des Audiosignals im Wiedergabebetrieb des Systems durch kurzzeitiges Umschalten auf
Aufnahmebetrieb erfolgt, währenddessen das Überschreiben vorgenommen wird.

4. Verfahren nach Ansprüchen 2 und 3, dadurch gekennzeichnet, daß mittels der Horizontal-Synchronimpulse
des wiedergebenden Videosignals das Umschalten in den
Aufnahmebetrieb gesteuert wird.

5. Verfahren nach einem oder mehreren der Ansprüche 1
bis 4, dadurch gekennzeichnet, daß das Original-Audiosignal als Puls-Amplituden-Modulations-Signal vorliegt.

6. Verfahren nach einem oder mehreren der Ansprüche 1
bis 4, dadurch gekennzeichnet, daß das Original-Audiosignal als Puls-Phasen-Modulations-Signal vorliegt.

7. Verfahren nach einem oder mehreren der Ansprüche 1
bis 4, dadurch gekennzeichnet, daß das Original-Audiosignal als Puls-Längen-Modulationssignal vorliegt.

8. Verfahren nach einem oder mehreren der Ansprüche 1
bis 4, dadurch gekennzeichnet, daß das Original-Audiosignal als Puls-Code-Modulationssignal vorliegt.

9. Verfahren nach Anspruch 1 und 2 und einem der Ansprüche 3 bis 8, wobei das Videosignal ein Farbvideosignal ist, dadurch gekennzeichnet, daß bei
Aufnahme der Farbburst von der hinteren Schwarzschulter der Horizontal-Austastlücke in den Boden des
Horizontal-Synchronisier-Signals versetzt und bei
Wiedergabe in die Originallage zurückversetzt wird.

10. Verfahren nach Anspruch 9, dadurch gekennzeichnet,
daß die Dauer des Horizontal-Synchronisier-Signals
bei Aufnahme verkürzt und bei Wiedergabe wieder zur
Originaldauer ausgedehnt wird.

11. Anordnung zum Durchführen des Verfahrens nach Anspruch 1, wobei das A/W-System einen FM-Modulator
(Mod) und mindestens einen Synchronisiersignal-Abtrenner im Aufnahmekanal (AK) enthält, dadurch gekennzeichnet, daß hinter den Audio- und Videosignaleingängen (Au und V) und vor dem FM-Modulator (Mod)
Schalter (S 1, S 2) angeschlossen und Zeitglieder
(TS 1) zwischen dem mindestens einen Synchronisier-Abtrenner und dem Schalter (S 1, S 2) und dem FM-Modulator (Mod) vorgesehen sind zum zeitrichtigen Einsetzen

0051740

des Audiosignals in die Horizontal-Austastlücke des Videosignals.

12. Anordnung nach Anspruch 11, wobei im Wiedergabekanal des A/W-Systems ein FM-Demodulator (Dem) und ein Synchronisiersignal-Abtrenner vorgesehen sind, dadurch gekennzeichnet, daß zwischen dem FM-Demodulator (Dem) und den Audio- und Videosignalausgängen Schalter (S 5-S 7) vorgesehen sind, und zwischen dem Synchronisiersignal-Abtrenner und den Schaltern (S 5-S 7) Zeitglieder (TS 2) vorgesehen sind zur zeitrichtigen Steuerung der Schalter (S 5-S 7) bei Wiedergabe der Signale.

13. Anordnung nach Ansprüchen 11 und 13, dadurch gekennzeichnet, daß auch ein A/W-Umschalter (S 3, S 4) über die Zeitglieder (TS 1) gesteuert wird.

14. Anordnung nach Ansprüchen 11 und 12, dadurch gekennzeichnet, daß mittels der Zeitglieder (TS 1, TS 2) die Dauer und die zeitliche Lagen des oder der Abtastimpulse eingestellt werden.

15. Anordnung nach Ansprüchen 11 bis 14, dadurch gekennzeichnet, daß bei Nachvertonung über vom Synchronisiersignalabtrenner im Wiedergabekanal (WK) über die Zeitglieder (TS 1, TS 2) die Schalter (S 1, S 2) im Aufnahmekanal (AK), im Wiedergabekanal (WK), (S 5-S 7) und der A/W-Umschalter (S 3, S 4) zeitrichtig gesteuert werden.

16. Anordnung nach Ansprüchen 11 bis 15, <u>dadurch gekenn-zeichnet</u>, daß eine Schaltung zum Erfassen des Farbburstsignals auf der hinteren Schwarzschulter der Horizontal-Austastlücke und eine Umsetzschaltung für das Farbburstsignal in den Boden des Synchronisiersignals vorhanden sowie eine Schaltung zum Zurückversetzen des Farbburstsignals in seine Originallage vorge-sehen sind.

Zeichn.

-AK-

-WK-

FIG.1

FIG.2

VSS

BS

V1 · HS · TP · V2

$t_0$ · $t_0'$ · $t_1$ · $t_2$ · $t_2'$ · $t_3$

$\Delta t$

FIG.3a

S1
S2
S3

3b

S5
S6
S7
S4

3c

S1
S2
S3
Mod
S4
S5
S6
S7

3d